(19) Europäisches Patentamt / European Patent Office / Office européen des brevets

(11) **EP 3 278 446 B1**

(12) **EUROPÄISCHE PATENTSCHRIFT**

(45) Veröffentlichungstag und Bekanntmachung des Hinweises auf die Patenterteilung:
**05.08.2020   Patentblatt 2020/32**

(21) Anmeldenummer: **16709091.9**

(22) Anmeldetag: **10.03.2016**

(51) Int Cl.:
***H02P 6/16*** (2016.01)

(86) Internationale Anmeldenummer:
**PCT/EP2016/055196**

(87) Internationale Veröffentlichungsnummer:
**WO 2016/156006 (06.10.2016 Gazette 2016/40)**

(54) **VERFAHREN ZUR SENSORLOSEN LAGEBESTIMMUNG DES ROTORS VON ELEKTRONISCH KOMMUTIERTEN SYNCHRONMASCHINEN**

METHOD FOR SENSOR-FREE POSITION DETERMINATION OF THE ROTOR OF ELECTRONICALLY COMMUTATED SYNCHRONOUS MACHINES

PROCÉDÉ POUR DÉTERMINER SANS CAPTEUR LA POSITION DU ROTOR DE MACHINES SYNCHRONES À COMMUTATION ÉLECTRONIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **31.03.2015   DE 102015105007**

(43) Veröffentlichungstag der Anmeldung:
**07.02.2018   Patentblatt 2018/06**

(73) Patentinhaber: **EBM-Papst Mulfingen GmbH&CO. KG**
**74673 Mulfingen (DE)**

(72) Erfinder:
• **NEBER, Markus**
**74653 Kuenzelsau (DE)**
• **LEY, Thomas**
**97990 Weikersheim-Laudenbach (DE)**
• **KROTSCH, Jens**
**97996 Niederstetten (DE)**

(74) Vertreter: **Staeger & Sperling Partnerschaftsgesellschaft mbB Sonnenstraße 19 80331 München (DE)**

(56) Entgegenhaltungen:
**EP-A1- 2 293 430     DE-A1- 4 116 085**

**Beschreibung**

Die Erfindung betrifft ein Verfahren zur sensorlosen Lagebestimmung des Rotors von elektronisch kommutierten Synchronmaschinen, wie z. B. EC-Motoren.

Aus dem Stand der Technik sind diverse EC-Motoren bekannt. So wird zum Beispiel in der elektrischen Antriebstechnik der bürstenlose Gleichstrommotor (BLDC; Brushless DC Motor) immer beliebter. Da es bei diesem Motorentyp keinen mechanischen oder elektrischen Kontakt zwischen Stator und Rotor des BLDC-Motors gibt, sind zur Bestimmung ihrer relativen Position alternative Anforderungen an die Motorsteuerung erforderlich. Für BLDC-Motoren gibt es dazu zwei mögliche Methoden: entweder die sensorgesteuerte oder sensorlose Kommutierung.

Bei der sensorgesteuerten Kommutierung werden z.B. Hall-Sensoren zur Erfassung des magnetischen Flusses des Rotors oder optische Sensoren im Bereich des Stators eingesetzt. Entsprechend der konkreten Stellungsinformation werden über geeignete Leistungstreiber von der Steuerelektronik die Rotorwicklungen angesteuert, um ein Drehmoment zu erzeugen.

Speziell bei Ventilatorantrieben werden regelmäßig permanentmagnetisch erregte Synchronmaschinen in Verbindung mit einer Kommutierungselektronik verwendet. Für die Kommutierung wird typischerweise ein Pulswechselrichter mit der Raumzeigermodulation verwendet. Hierzu muss die aktuelle Rotorposition des Rotors bekannt sein. Diese Rotorposition bzw. der Rotorwinkel gegenüber dem Stator wird neben der Auswertung von Positionserfassungselementen, wie zuvor angegeben oft auch durch ein sensorloses, sogenanntes Lagegeberlos-Verfahren ermittelt.

Eine alternative Methode ist demzufolge die sensorlose Erfassung der Lage bei der z. B. die Messung der rückwirkenden EMK oder deren Auswirkung zur Positionsbestimmung herangezogen wird. Die Erfassung der Rotorposition erfolgt mit Hilfe einer Steuerung, die die in den Spulen des Stators ausgelöste Gegenspannung auswerten kann. Allerdings ist zur Auswertung der Gegenspannung eine gewisse Mindestdrehzahl erforderlich. Dies hat zur Folge, dass sensorlose EC-Motoren bis zum Erreichen der Mindestdrehzahl ohne deren Lageinformation kommutiert werden müssen.

Aus den Druckschriften US 2010/0181952 A1, EP 2 061 147 A2, US 8,294,397 B2 und US 7,334,854 B1 sind zum Beispiel Verfahren bekannt, die sich mit der sensorlosen Kommutierung beim Motoranlauf beschäftigen.

Zur sensorlosen Ermittlung der Rotorposition des Rotors eines BLDC-Motors sind verschiedene Verfahren aus dem Stand der Technik bekannt. So wird z. B. die aktuelle Rotorposition durch eine Auswertung der Nulldurchgänge der induzierten Gegenspannung (EMK) in den jeweils nicht bestromten Wicklungssträngen ermittelt, da ein in dem Wicklungssystem induzierter Spannungsvektor in eindeutiger Weise mit der Rotorposition zusammenhängt. Diese Auswertung setzt jedoch eine prinzipielle Bewegung des Rotors voraus. Zwar lässt sich ein solches Verfahren auch bei sehr langsamer Drehung des Rotors anwenden, jedoch weist mit abnehmender Drehzahl die ermittelte Rotorlage immer größere Fehler auf.

Eine andere Möglichkeit basiert auf der Variation der Induktivität des BLDC-Motors. Der Rotor als Permanentmagnet erzeugt in Folge von Sättigung eine magnetische Asymmetrie, da der magnetische Widerstand in Richtung von dessen Magnetisierung (d-Achse) größer ist als im Vergleich zu der Querrichtung (q-Achse). Daraus ergibt sich eine von der Rotorlage abhängige Induktivität des BLCD-Motors. Derjenige Wicklungsstrang des Stators, dessen magnetische Achse mit der d-Achse des Rotors zusammenfällt, weist eine minimale Induktivität auf und derjenige Wicklungsstrang, dessen magnetische Achse mit der q-Achse, d. h. um 90° verdreht, zusammenfällt, weist eine maximale Induktivität auf. Im unbestromten Zustand des BLDC-Motors besitzt der Südpol und der Nordpol des Rotors als Permanentmagnet die gleiche Wirkung, somit weist der Verlauf dieser variablen Induktivität gegenüber den elektrischen Größen die doppelte Periodizität auf. Diese 180°-Uneindeutigkeit muss für eine vollständige Lageinformation aufgelöst werden. Hierzu wird entsprechend der Richtung des Rotors ein Spannungssignal angelegt, so dass in Folge des in den Wicklungen fließenden Stroms die Sättigung im Stator verringert oder verstärkt, d. h. die entsprechende Induktivität verkleinert oder vergrößert wird, so dass hieraus die Rotorlage bestimmt werden kann.

Dieser induktive Ansatz zur Bestimmung der Rotorposition ist beispielsweise aus der Druckschrift AT 395 487 B bekannt, bei dem die von Spannungsimpulsen erzeugten Stromimpulse und zugehörigen Spannungsimpulse detektiert und die sich hieraus ergebenden Induktivitäten bestimmt werden. Diese Induktivitätswerte werden einem sinusförmigen Verlauf entlang des Umfangs zugeordnet, um hieraus die aktuelle Position innerhalb des sinusförmigen Verlaufs zu ermitteln. Um die bei einem sich drehenden Rotor auftretende EMK-Spannung im Messergebnis kompensieren zu können, muss gemäß diesem bekannten Verfahren jedoch eine zweite Messung durchgeführt werden.

Die bekannten Lagegeberlos-Verfahren können prinzipiell in zwei Gruppen eingeteilt werden. Einerseits gibt es die aktive Verfahren und andererseits die sogenannte passive Verfahren. Bei den aktiven Verfahren werden neben der für die Regelung des Antriebs notwendigen Spannung zusätzliche Testspannungswerte eingeprägt und deren Antwortfunktion ausgewertet. Passive Verfahren berechnen aus den Grundschwingungen von Spannung und Strom die Rotorposition. Sie beruhen meist auf dem Prinzip der im Stator rückwirkenden Polradspannung.

Aus der DE 102012212766 A1 ist zum Beispiel ein aktives Verfahren zur Bestimmung der Rotorlage eines elektronisch kommutierten mehrphasigen Gleichstrommotors (BLDC-Motor) mit einer Kommutierungsvorrichtung bekannt, wobei mehrere Testspannungsimpulse in dem Wicklungssystem mit vorgegebener Einschaltdauer mittels der Kommutierungsvorrichtung in unterschiedlichen über 360° verteilten Phasenlagen erzeugt werden, alsdann die Messung der Stromwerte der Stromantworten der Testspannungsimpulse mit Ablauf der Einschaltdauer der jeweiligen Testspannungsimpulse erfolgt und anschließend eine Approximation der gemessenen Stromwerte durch eine periodische Approximationsfunktion aus einer Überlagerung einer Grundwelle und der dazugehörigen ersten Oberwelle in Abhängigkeit der Phasenlage der Testspannungsimpulse durchgeführt wird. Aus der Bestimmung des Amplitudenverhältniswertes der Stromantworten der Grundwelle und der ersten Oberwelle der Approximationsfunktion erfolgt dann die Bestimmung der Rotorlage als EMK-Winkel aus dem Argument der Grundwelle der Approximationsfunktion und/oder als Induktivitäts-Winkel aus dem Argument der ersten Oberwelle der Approximationsfunktion in Abhängigkeit des besagten Amplituden-Verhältnisses.

Zuvor genannte Verfahren haben je nach Anwendung ihre Vorteile und Nachteile. In der Antriebstechnik werden zur Positionsbestimmung meist Verfahren die mit Testsignalen arbeiten verwendet. Mit ihnen ist es möglich, die Position auch bei geringen Drehzahlen bis hin zum Stillstand zu bestimmen.

Nachteilig ist dabei, dass diese Antriebe meist (durch die Testsignale) Geräusche in einem für das menschliche Ohr ungünstigen Frequenzbereich erzeugen. Diesbezüglich weisen die passiven Verfahren einen Vorteil auf, da diese keine störenden Geräusche zur Positionsbestimmung erzeugen. Die passiven Verfahren, die auf der Auswertung der Polradspannung beruhen, setzen aber in nachteiliger Weise eine bestimmte Mindestdrehzahl (je nach Antrieb und Verfahren zwischen 5 und 20% der Nenndrehzahl) für eine zuverlässige Rotorpositionsermittlung voraus. Unterhalb dieser Mindestdrehzahl ist keine sichere Auswertung gegeben, was sich vor allem in nachteiliger Weise auf den Anlauf des Antriebes auswirkt. Ferner ist zu bedenken, dass mit sinkender Rotordrehzahl das Verhältnis Nutz- zu Störsignal bei der Polradspannungsmessung, aufgrund der messtechnischen Genauigkeit einer Spannungsmessung zunehmend ungünstiger wird, so dass die Zahl der falschgewerteten Rotorpositionswerte zunimmt.

Damit z. B. ein Ventilator-Antrieb vom Stillstand in einen gewünschten Betriebszustand geführt werden kann, ist ein Verfahren notwendig mit dem die Rotorposition ohne Polradspannungsrückwirkung ermittelbar ist. Ein solches Verfahren muss zuverlässig und geräuscharm oder jedenfalls unter Vermeidung störender Testsignalgeräusche die relative Lageposition des Rotors ermitteln.

Die europäische Patentanmeldung EP2293430A1 offenbart ein Verfahren zur Rotorpositionsermittlung durch Auswertung von durch in die Statorwicklung eingespeiste hochfrequente Spannungssignale erzeugte Stromantworten.

Aufgabe der vorliegenden Erfindung ist es, vorbesagte Nachteile zu überwinden und ein alternatives und verbessertes Verfahren zur sensorlosen Bestimmung der Rotorlage eines EC-Motors, insbesondere eines EC-Ventilatorantriebes bereitzustellen. Ein EC-Ventilatorantrieb bedeutet im Sinne der vorliegenden Erfindung eine permanenterregte Synchronmaschine mit elektronischer Kommutierung in Verbindung mit einem Lüfterrad mit einem gegenüber dem Rotor wesentlich höheren Trägheitsmoment, was sich insbesondere auf Anlauf- und Auslaufverhalten auswirkt.

Mit der Erfindung werden unter anderem die folgenden Ziele verfolgt:

- Die zuverlässige Ermittlung der relativen Rotorlageposition (Bezugswinkel zwischen Stator und Rotor), die eine Abweichung zur tatsächlichen Rotorlageposition < 60° bei einer richtungsunabhängigen Drehbewegung des Rotors bis |n| < 10% der Nenndrehzahl.

- Bei der Rotorpositions-Ermittlung die Geräuschanregung so gering wie möglich zu halten und daher möglichst wenig Energie in die Klang-Anregung sondern in die Positionsauswertung zu leiten.

- Zeitoptimierte Bestimmung zwischen der schnellst möglichen allerdings geräuschintensiven Positionsermittlung und einer relativ langsamen hingegen geräuscharmen Auswertung.

- Die Anfangs-Drehzahl abzuschätzen.

- Eine Rückmeldung über den Grad der Zuverlässigkeit des Ergebnisses zu erhalten.

- Den Übergang in den statischen Betrieb über das Mitschleppen des Rotors mittels Stromzeiger zu gewährleisten.

Diese Aufgabe wird gelöst mit einem Verfahren zur Ermittlung der relativen Rotorposition eines Rotors eines EC-Antriebs mit den Merkmalen von Anspruch 1.

Der Grundgedanke der vorliegenden Erfindung ist das geräuscharme Einprägen des Testsignals und dessen Auswertung mittels langsam ansteigender Stromsignale aufgrund eines langsam ansteigenden Testsignals gemäß einer wenigstens einmal stetig differenzierbaren Spannungsanstiegsfunktion, wobei es sich bei dem erfindungsgemäßen Testsignal um einen Spannungszeiger in Abhängigkeit der anwendungsspezifischen Frequenz handelt.

Erfindungsgemäß kann der Spannungszeiger wie folgt angegeben werden:

$$u_1 = f_d \cdot A \cdot e^{(i\omega t + \varphi)}$$

Dabei steht die Kreisfrequenz mit $\omega = 2\pi f_{Test}$ im Bezug zur Testfrequenz $f_{Test}$. Der Parameter $\varphi$ im Exponent der komplexen e-Funktion ist ein frei wählbarer Startwinkel. Mit der Funktion $f_d$ deren Wertebereich im Zahlenraum $R^1 \in [0, 1]$ liegt, wird die Testspannungs-Amplitude A für die Anstiegs- bzw. Abstiegsphase vorgegeben. Die bevorzugten Anstiegsfunktionen werden später näher erläutert.

In einem vorteilhaften Ausführungsbeispiel der Erfindung wird demzufolge der Stromanstieg über die Spannungsvorgabe herbeigeführt. Der Strom sowie seine Änderung erzeugen eine Kraft auf den Permanentmagneten in der Rotor-Glocke. Erfindungsgemäß wird vorgesehen den Strom langsam, in einem wenigstens einmal stetig differenzierbaren Verlauf ansteigen zu lassen. Da der Rotor in der Glocke selbst ein schwingungsfähiges System darstellt, besitzt der Rotor folglich eine Eigenfrequenz und unerwünschte Geräusche entstehen bei einer Anregung nahe oder identisch der Eigenfrequenz, was dem Resonanzfall entspricht. Der Stromanstieg und damit die zeitliche Änderung der Ströme haben unmittelbar einen Einfluss auf die Anregungsamplituden im Frequenzbereich der Eigenfrequenz. Um kleine Anregungsamplituden und damit geringe Geräuschentwicklung zu erzielen, sollte die zeitliche Änderung des Stromes langsam in einem wenigstens einmal stetig differenzierbaren Verlauf und nicht wie im Stand der Technik sprunghaft oder bzw. sinusförmig erfolgen. Erfindungsgemäß ist demnach ein Verfahren zur sensorlosen Bestimmung der Rotorlage eines elektronisch kommutierten mehrphasigen EC-Motors mit einem Rotor, einem Stator und mit einer Kommutierungsvorrichtung zur Erzeugung von Strangströmen im Spulensystem des Stators mit wenigstens den folgenden Schritten vorgesehen:

    a. Einprägen eines Testspannungssignales $u_1$ in das Spulensystem, wobei das Testspannungssignal $u_1$ ein Spannungszeiger mit der Kreisfrequenz $\omega$ darstellt und die Spannungsamplitude A des Spannungszeigers zunächst während einer Anstiegsphase $PH_{an}$ auf eine Testspannung $U_{TEST}$ ansteigt und danach für eine definierte Anzahl von Perioden $N_A$ während einer Messphase $PH_{Mess}$ konstant bleibt,
    b. wobei der Spannungsanstieg während der Anstiegsphase $PH_{an}$ einen solchen Kurvenverlauf aufweist, dass dieser im gesamten Verlauf wenigstens einmal stetig differenzierbar ist, und
    c. Messung des Stromwertes i im Strang als Stromantwort des Testspannungssignals $u_1$,
    d. Ermittlung bzw. Berechnung von $|i|$ zur Hüllkurvenermittlung und
    e. Ermittlung der Rotorposition $\gamma_0$ durch Auswertung der Stromantwort, wobei der Effekt genutzt wird, dass infolge der Spannungsanregung in Schritt a) dort die größte Strom-Antwort erzeugt wird, wo die Induktivität am geringsten ist, wobei die Rotorposition $y_0$ in Bezug auf die kleinste Induktivität festgelegt wird.

In einer vorteilhaften Ausführungsform ist das Verfahren so ausgebildet, dass sich am Ende der Messphase entweder eine Abklingphase $PH_{ab}$ anschließt, bei der die Amplitude A des Spannungszeigers entsprechend dem Verlauf der Anstiegsfunktion wieder reduziert wird oder aber ein direkter Übergang in den Betrieb des EC-Motors durch Kommutierung des Rotors mittels rotorlageabhängigen Strangströmen, nach Ermittlung der Rotorposition in Schritt d) erfolgt.

Erfindungsgemäß werden die folgenden bevorzugten Spannungsanstiegsformen vorgeschlagen, bei dem die Amplitude des Spannungszeigers der folgenden zeitabhängigen Funktion $f_d$ folgt, deren Wertebereich zwischen 0 und 1 liegt:

$f_d = 0$               vor der Anstiegsphase ($PH_{an}$)
$f_d = f(t)$ mit $f'(t) > 0$    bei der Anstiegsphase ($PH_{an}$)
$f_d = 1$               während der Messphase ($PH_{Mess}$).

wobei $f'(t) = df/dt$ ist.

Sofern kein wie zuvor beschriebener direkter Übergang in den Betrieb erfolgt, sondern nach der Messphase eine Abklingphase anschließt, ist vorgesehen, dass die Amplitude des Spannungszeigers ferner der folgenden zeitabhängigen Funktion $f_d$ folgt:

$f_d = f(t)$ mit $f'(t) < 0$    bei der Abklingphase ($PH_{ab}$).

In einer weiter vorteilhaften Ausgestaltung der Erfindung ist vorgesehen, dass die Kreisfrequenz $\omega = 2\pi f_{TEST}$ des Spannungszeigers gemäß einer Anregungsfrequenz zwischen einer minimalen und maximalen Frequenz bestimmt wird, die mittels einer Frequenzanalyse, vorzugsweise zwischen 10 Hz und 500 Hz anwendungsspezifisch bestimmt wird. Die kleinste Frequenz $f_{Test,min}$ richtet sich nach dem Verhältnis der Rotorträgheit zum Nennmoment. Der Grund hierfür ist die Vermeidung einer unerwünschten Rotor-Pendelbewegung. Die maximale Frequenz $f_{Test,max}$ ermittelt sich nach der gewünschten Genauigkeit aus dem Verhältnis PWM-Frequenz / Anzahl der Abtastungen. Für eine Genauigkeit von 10°el sind zum Beispiel mindestens 37 Abtastungen notwendig ($f_{Test}$ = 16000/37 ≈ 430 Hz).

Als Anstiegsfunktionen für den Amplitudenanstieg A des Testspannungssignals werden bevorzugt eine Kurvenform mit entweder linearem Verlauf, gemäß einer $\sin^2$-Funktion oder gemäß einer Sigmuidfunktion (S-Funktion) verwendet. Die entsprechende Kurvenform kann sowohl für den ansteigenden Ast der Hüllkurve des Spannungszeigers als auch für den abklingenden Ast der Hüllkurve des Spannungszeigers verwendet werden.

Zur Gewährleistung einer ausreichend langen Anstiegszeit zur Vermeidung von störenden Geräuschen für die Anstiegsphase ist es weiter vorteilhaft, wenn eine Mindestanzahl $N_A$ von Perioden, vorzugsweise mindestens 2 Perioden, weiter bevorzugt von mindestens 4 Perioden verwendet wird.

Das erfindungsgemäße Verfahren lässt sich in besonders vorteilhafter Weise auf einen EC-Ventilator anwenden. Dabei ist zur Ermittlung der Rotorlage eines Rotors mit einem Rotordurchmesser $r_{Rotor}$ eines von einem EC-Motor antreibbaren Ventilators mit Laufraddurchmesser $D_{Ventilator}$ vorgesehen, dass die Mindestanzahl $N_A$ von Perioden als gerundeter Quotient aus dem halben Laufraddurchmesser $D_{ventilator}$ und dem Rotordurchmesser $r_{Rotor}$ ermittelt wird.

Weiter bevorzugt ist es, wenn die Ermittlung der Rotorposition $\gamma_0$ im zuvor geannten Schritt d) entweder durch Abfrage eines relativen Winkelwertes θ des Spannungszeigers erfolgt, bei dem der Amplitudenwert des Stromzeigers i der Stromantwort ein Maximum aufweist oder durch direkte Berechnung in einem statorfesten Bezugssystem durch Ermittlung des Arkustangens aus dem Quotienten der Richtungsanteile des Stromzeigers i erfolgt. Bei beiden Methoden werden die Strangströme in ein 2-Achskoordinatensystem (α, β-System) transformiert, wobei sich die Stromzeigerlänge als Betrag aus der Wurzel aus der Summe der jeweiligen Quadrate des α- und β-Anteils des Stromzeigers im 2-Achskoordinatensystem errechnet und sich die Rotorposition $\gamma_0$ bei der ersten Methode aus dem Winkel θ des Spannungszeigers bestimmt, bei dem die zuvor genannte Stromzeigerlänge maximal ist. In einer Weiterentwicklung des erfindungsgemäßen Verfahrens zur Ermittlung der Rotorposition $\gamma_0$ gemäß dem zuvor erläuterten Verfahren ist vorgesehen, dass ferner ein Korrekturwinkel ermittelt wird, um den ermittelten Winkel θ der Rotorposition zu korrigieren. Eine Korrekturbedürftigkeit ergibt sich aufgrund der Einflussfaktoren des Strangwiderstandes $R_S$, der wirksamen Induktivität $L_e$ und der Testfrequenz. Erfindungsgemäß lässt sich ein Korrekturwinkel wie folgt ermitteln:

$$\varphi = \arctan\left(2\,\pi\,f_{Test}\,L_e\,/\,R_S\right)$$

Bei der zweitgenannten Methode erfolgt die Berechnung, wie zuvor erwähnt aus dem Quotienten des Arkustangens des jeweiligen α- und β-Anteils des Stromzeigers im 2-Achskoordinatensystem, bei dem die zuvor genannte Stromzeigerlänge maximal ist.

In einer besonders vorteilhaften Weiterentwicklung des erfindungsgemäßen Verfahrens ist ferner bei der Ermittlung der Rotorposition $\gamma_0$ in Schritt d) eine Polradspannungskompensation vorgesehen, wobei für jeden Strangstrom der Mittelwert des Strangstromes bestimmt wird und am Ende der Periode vom gespeicherten Strangstromverlauf subtrahiert wird. Diese Maßnahme wird später im Rahmen der Beschreibung bevorzugter Ausführungsbeispiele näher erläutert.

Vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt.

Es zeigen:

Fig.1    Hüllkurven für den Amplitudenanstieg der Amplitude A des Spannungszeigers;

Fig.2    Hüllkurven gemäß der Figur 1, jedoch zusätzlich mit Darstellung der Strangspannung eines Stranges;

Fig.3    Verlauf eines beispielhaften Spannungstestsignals aus Anstiegsphase, Messphase und Abklingphase;

Fig.4    Darstellung der resultierenden Strangströme und der Hüllkurve der Stromantwort;

Fig.5    eine Detailansicht aus der Messphase gemäß Figur 4;

Fig.6    Darstellung der Auswirkung der durch leichte Drehung verursachte Rückwirkung der Polradspannung auf die Ermittlung der Rotorlage, einmal ohne Polradspannungskompensation und dazu im Vergleich mit Polradspannungskompensation;

Fig.7    Darstellung der Rotordrehung während der Messphase und der Korrektur der Anfangsposition bei der Drehung und

Fig. 8    Berechnung der Rotordrehung

Fig. 9    veranschaulicht eine Stromabweichung vom stationären Stromverlauf (a) infolge eines gewählten Spannungsanstieges (b,c,d,e).

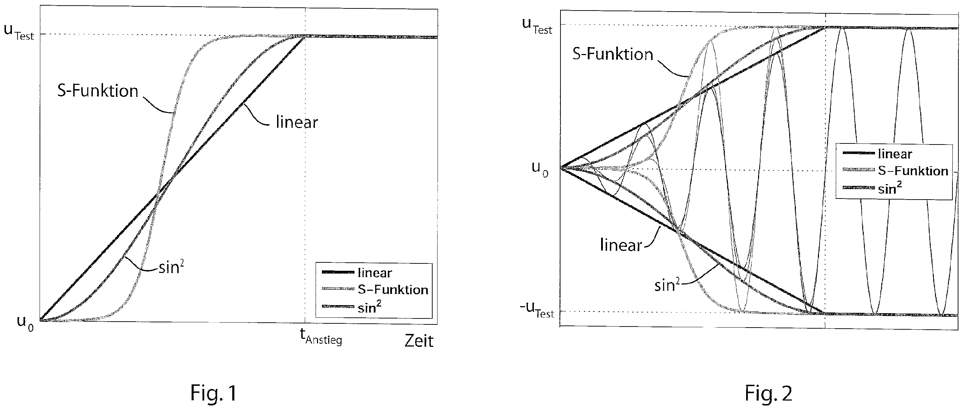

Die Erfindung wird anhand der folgenden Ausführungsbeispiele mit Hilfe der Figuren 1 bis 9 näher erläutert, wobei sich gleiche Bezugszeichen in den Figuren auf gleiche strukturelle oder funktionale Merkmale beziehen und ggf. zur Vermeidung von Wiederholungen nicht erneut erläutert werden.

In den Figuren 1 und 2 sind je drei beispielhafte Hüllkurven für den Amplitudenanstieg der Amplitude A des Spannungszeigers $u_1$ dargestellt, wobei die Figur 2 eine Anstiegsfunktion, die ihren Maximalwert nach 4 Perioden erreicht darstellt. Neben der Hüllkurve ist in Figur 2 zusätzlich eine periodische Strangspannung dargestellt.

Die Funktion $f_d$ verläuft in einem ersten Ausführungsbeispiel linear (linearer Spannungsanstieg):
Hier erfolgt die Vorgabe des Stroms über eine lineare Zunahme der Spannungsamplitude in der Form

$$f_d\,(t) = \,(f_{Test}\,/\,N_A)\cdot t$$

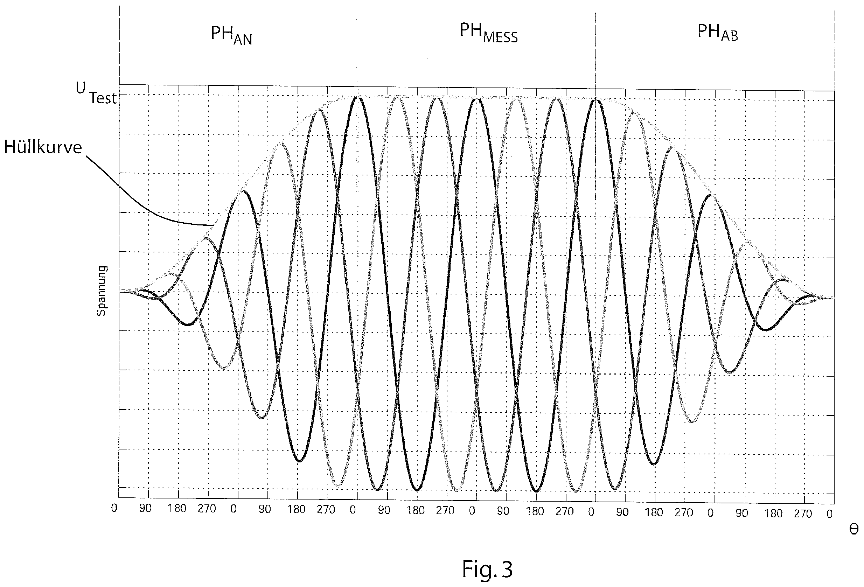

Für einen EC-Ventilator, wird die Mindestvorgabe der Anzahl der Anstiegs-Perioden $N_A$ an Hand des Verhältnisses der Durchmesser der Anwendung zum Rotordurchmesser, wie zuvor beschrieben festgelegt. In der Figur 2 ist der Wert $N_A$=4. Ab der 5.ten Periode beginnt die Messphase $PH_{Mess}$, wie diese in der Figur 3 im Anschluss an die Anstiegsphase $PH_{AN}$ zu sehen ist.

Die Funktion $f_d$ verläuft in den Figuren 1 und 2 in einem zweiten Ausführungsbeispiel gemäß einer $\sin^2$-Funktion:

$$f_d\,(t) = \,\sin^2\left((f_{Test}\,/\,N_A)\cdot(\pi/2)\cdot t\right)$$

Die Funktion $f_d$ verläuft in den Figuren 1 und 2 gemäß dem dritten Ausführungsbeispiel als S-Funktion wie folgt:

$$f_d \;=\; \frac{1}{1 + e^{\left(-t + \frac{4N_A^2}{f_{Test}\cdot k_d\cdot\left(2N_A - 1\right)}\right)}}$$

Hier wird wie bei der zweiten Ausführungsform ein Ruck vermieden. Zusätzlich wird über den im Argument der e-Funktion auftretenden Faktor $k_d$ eine Streckung und Verschiebung der Anstiegsfunktion vorgenommen, was dazu führt, dass die Anstiegsphase beeinflusst wird. Dies hat weiter zur Folge, dass die eingeprägten Spannungswerte näher bei der stationären Anregungsspannung liegen, was zu einer kürzeren Einschwingphase des Stroms und somit zu einer früher beginnenden Auswertung der Stromantwort führen kann. Weitere ähnliche Kurvenformen sind durch Variation der Parameter einfach zu erzeugen.

Die Figur 3 zeigt den Verlauf eines beispielhaften Spannungstestsignals aus Anstiegsphase $PH_{AN}$, Messphase $PH_{MESS}$ und Abklingphase $PH_{AB}$.

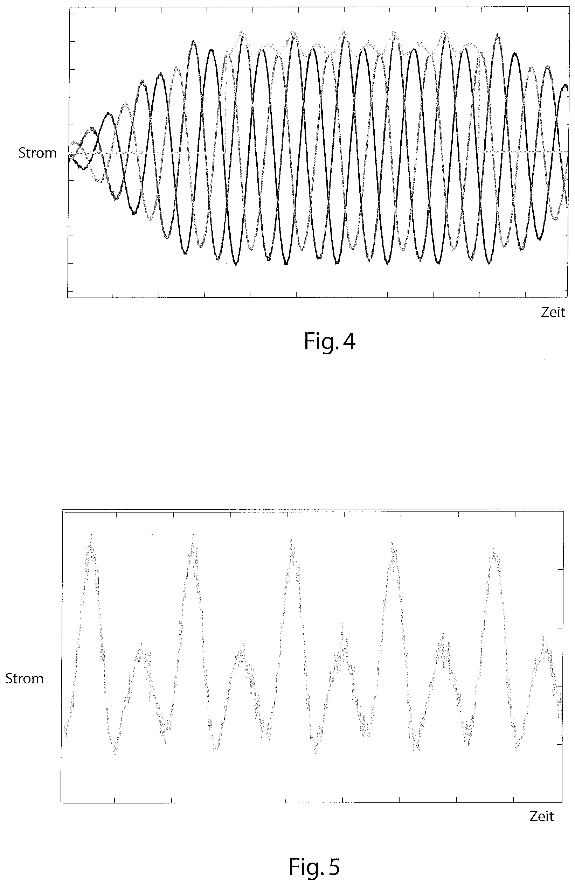

Ein weiterer Aspekt der Erfindung betrifft die Auswertung der Stromantwort, die anhand der Darstellung der Figuren 4 und 5 näher erläutert werden. Diese zeigen die resultierenden Strangströme und die entsprechende Hüllkurve der Stromantwort. Die Figur 5 ist hierbei lediglich eine vergrößerte Detailansicht aus der Messphase gemäß Figur 4.

Hierbei wird der Effekt genutzt, dass die permanenterregte Synchronmaschine infolge einer Spannungsanregung dort die größte Strom-Antwort erzeugt, wo die Induktivität am geringsten ist (bzw. bei konstantem Strom die Spannung am geringsten) ist. Die Rotorposition kann daher in Bezug auf die kleinste Induktivität festgelegt werden.

Die Auswertung der Stromantwort erfolgt zeitlich erst in der Messphase $PH_{Mess}$, nach Ablauf der Anstiegsphase $PH_{AN}$, wenn der Stromverlauf der Hüllkurve in den stationären Zustand führt. Der Anstieg erfolgt in der bevorzugten Ausführung über die S-Funktion oder $\sin^2$-Funktion, da hier der Übergang in den stationären Verlauf "ruckfrei" und eindeutig stetig differenzierbar erfolgt. Die Ermittlung des Winkelwerts $\theta$ erfolgt ohne Polradspannungskompensation wie oben beschrieben.

Ergänzend kann erfindungsgemäß eine Überprüfung der Zuverlässigkeit der Auswertung erfolgen. Hierzu wird das erfindungsgemäße Verfahren dahingehend ergänzt, dass in einem weiteren Schritt die Zuverlässigkeit $\Pi$ der Aus-

wertung ermittelt und für die Entscheidung des weiteren Vorgehens herangezogen wird. Dazu wird die Differenz der beiden Strombetragsmaxima gebildet und mit einem Mindestwert verglichen. Dabei müssen die zwei Maxima ca. 180° auseinander liegen. Für den Zuverlässigkeitswert

$$\Pi = \begin{cases} \text{gut} & \text{wenn } |i_{max,1} - i_{max,2}| \geq \Delta_{imax} \\ \text{schlecht} & \text{wenn } |i_{max,1} - i_{max,2}| < \Delta_{imax} \end{cases}$$

Dabei kann $\Delta_{imax}$ zum Beispiel aus praktischen Vorversuchen ermittelt werden. Alternativ kann der Betrag mit 10 % vom Strombetragsmaximum angegeben werden.

Eine alternative Möglichkeit der Zuverlässigkeitsbewertung wird durch die Wiederholung des Anregungs- und Auswertungsschrittes erreicht. Dabei werden mindestens 2 volle Messphasen $PH_{Mess}$ durchlaufen und das Ergebnis miteinander verglichen. Der Unterschied im ermittelten Winkel darf einen festgelegten Maximalwert dabei nicht überschreiten. Dieser Schritt wird solange wiederholt, bis das Ergebnis zuverlässig ist oder eine Auswertung aussichtslos erscheint und ein Fehler an das System zurückgemeldet wird.

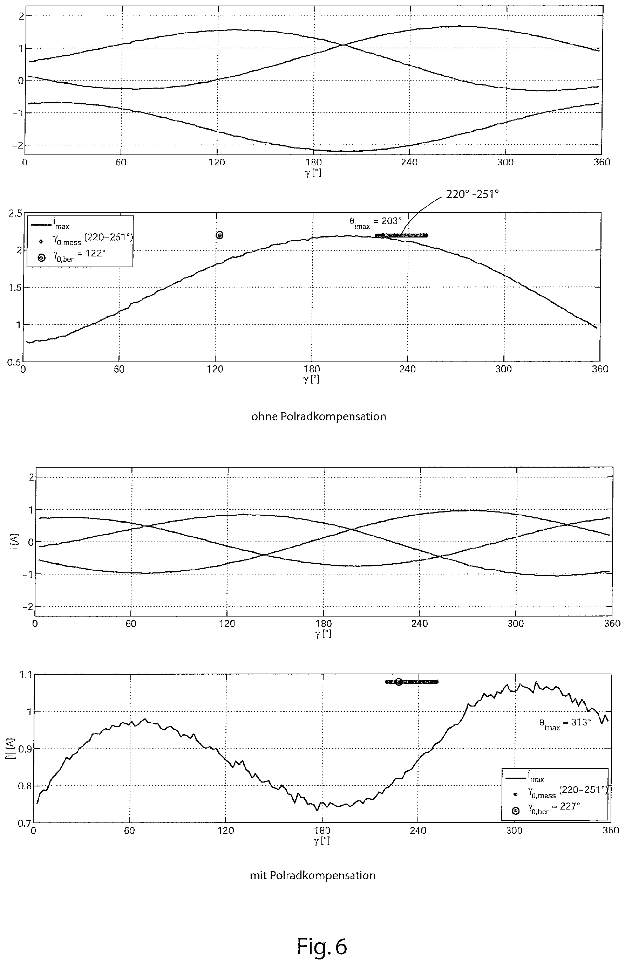

Eine weitere Variante (Variante mit Polradspannungskompensation) wird mit Bezug auf die Figur 6 näher erläutert. Diese zeigt eine Darstellung der Auswirkung der durch leichte Drehung verursachte Rückwirkung der Polradspannung auf die Ermittlung der Rotorlage, einmal oberhalb von (a) ohne Polradspannungskompensation und dazu im Vergleich oberhalb von (b) mit Polradspannungskompensation. Es sind in dem jeweils oberen Teil der Figur 6 die Strangstromverläufe von drei Strängen u,v,w über eine volle Periode dargestellt. In den unteren Darstellungen ist die für die Auswertung verwendete Hüllkurve sowie die Werte $\gamma_{0,mess}$ zwischen 220° - 251° (langgezogener Wertebereich für die Rotorposition) gezeigt. Da das Verfahren für einen sich leicht drehenden Rotor dargestellt ist, liegen die Werte hier nebeneinander und erscheinen als langgezogener "Punkt".

Der berechneten Rotorpositionwert $\gamma_{0,ber}$ ist in der oberen Darstellung (a) aufgrund der Rotordrehung und fehlender Korrekturfunktion ohne Polradkompensation fehlerhaft. Zu erkennen ist das ausgeprägte Maximum welches den Auswertungszeitpunkt festlegt, aber auf ein falsches Ergebnis führt. Der berechnete Wert sollte, abhängig von der Drehrichtung an einem der Enden der Strichpunktlinie $\gamma_{0,mess}$ liegen, da nur dann die Rotorposition richtig ermittelt wurde, wie dies in der Darstellung (b) mit der Polradkompensation zu sehen ist (siehe Figur 6 mit Polradkompensation).

In dieser Variante werden die, durch eine mechanische Rotor-Drehung beeinflussten Strangstrommessgrößen bereinigt, so dass die Auswertung entsprechend des zuvor beschriebenen Vorgehens möglich ist. Es wird für jeden Strang der Mittelwert des Strangstroms bestimmt, und am Ende der Periode, vom jeweilig gespeicherten Strangstromverlauf subtrahiert, so erreicht man durch diese einfache Maßnahme, dass der ermittelte Winkel dem der Rotorposition entspricht und der so berechnete Wert $\gamma_{0,ber}$ einem Wert innerhalb der Messpunktlinie $\gamma_{0,mess}$ entspricht.

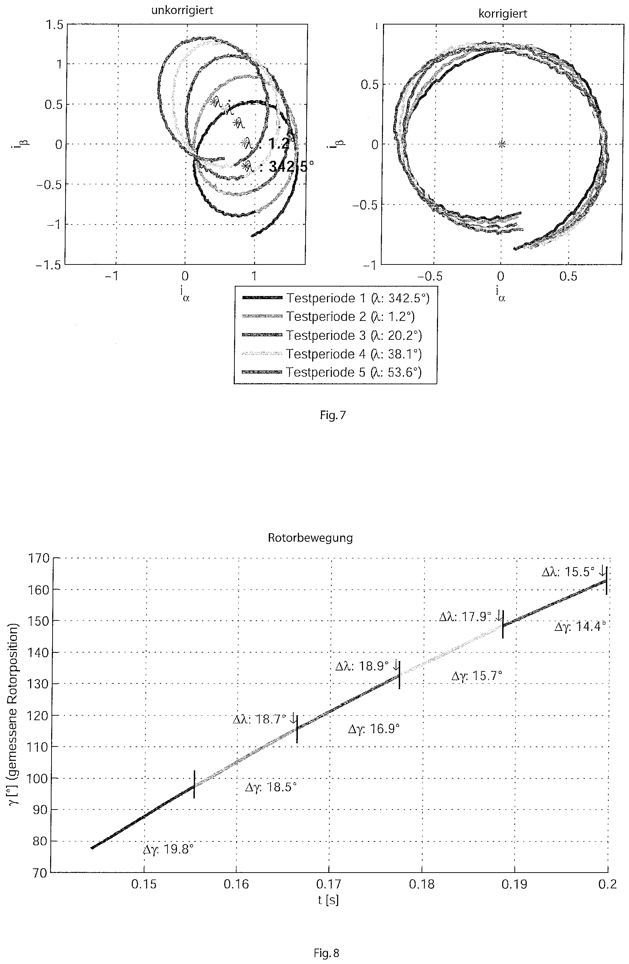

Die Figur 7 zeigt die Darstellung der Rotordrehung während der Messphase und der Korrektur der Anfangsposition bei der Drehung.

Mit Vorteil lässt sich mittels des erfindungsgemäßen Verfahrens auch eine Abschätzung der Anfangsdrehzahl durchführen. Durch die Auswertung der "Stromnullpunktverschiebung" in den gemessenen Strang-Strömen kann mit der folgenden Gleichung eine Abschätzung der Drehzahl vorgenommen werden, wobei aufgrund der niedrigen Drehzahlen im Anfangsdrehbereich der induktive Anteil vernachlässigbar ist:

$$\omega = (R_S \, i_q) \, / \, \psi_m$$

Mit Vorteil lässt sich mittels der folgenden Weiterentwicklung des erfindungsgemäßen Verfahrens auch eine genaue Ermittlung der Rotordrehung während der Messphase $PH_{Mess}$ durchführen und einer Korrektur der Anfangsposition bei der Drehung. Hierzu wird der Umstand genutzt, dass sich bei einem drehenden Rotor während der Auswertung in der Messphase $PH_{Mess}$ die Bewegung des Ellipsen-Mittelpunkts entsprechend der aktuellen Rotorposition bewegt. Hierdurch ist eine Abschätzung und ausreichend genaue Korrektur der fehlerhaft berechneten Rotorposition in den zuvor beschriebenen Ausführungsformen möglich. Dazu werden die Mittelwerte der Strangströme für die jeweilige el. Periode mit N-Messpunkten berechnet und mit den allgemein bekannten Achsentransformationen in ein statorfestes Bezugssystem transformiert.

Mit der Differenz des berechneten Werts wird die Rotorposition zum Ende der Testphase (Zeitspanne $PH_{MESS}$) wie folgt ermittelt:

$$\gamma_{0,korr} \quad = \quad \gamma_0 + \underbrace{N_{AB} \cdot \Delta\gamma_{z-1}}_{\gamma_{korr}} \cdot$$

$$\bar{i}_{Strang,z} \quad = \quad \frac{1}{N}\sum_{k=1}^{N} i_{Strang,k} \quad \text{für } Strang = [u, v, w]$$

bei der z-ten Testperiode

$$\bar{i}_{\alpha,\beta,z} \quad = \quad T\begin{bmatrix} i_{u,z} & i_{v,z} & i_{w,z} \end{bmatrix}^T$$

$$\Delta\gamma_{z-1} \quad = \quad \arctan\frac{\bar{i}_{\beta,z}}{\bar{i}_{\alpha,z}} - \arctan\frac{\bar{i}_{\beta,z-1}}{\bar{i}_{\alpha,z-1}}.$$

Hierbei ist $N_{AB}$ die Anzahl der Abklingperioden bei denen keine Auswertung der Stromantwort mehr erfolgt. Der Wert $\gamma_{korr}$ stellt den Korrekturwinkel dar. Eine Verbesserung besteht darin, dass zur Erhöhung der Genauigkeit der Lagebestimmung die positive bzw. negative Geschwindigkeitsänderung des Rotors berücksichtigt wird und dieser Korrekturwert an Stelle des Wertes $N_{AB} \cdot \Delta\gamma_{z-1}$ verwendet wird. Die Geschwindigkeitsänderung erhält man aus der Winkeländerung der vorausgegangenen Messperioden, woraus sich durch zweifache Integration über die Zeit innerhalb der Integrationsgrenzen $[0, N_{AB}/f_{Test}]$ ein Korrekturwert $\gamma_{korr}$ mit höherer Genauigkeit ergibt.

Eine alternative Methode stellt die Extrapolation des Korrekturwinkels auf Basis der vorausgegangenen Winkeländerung dar. Aus ihr erhält man einen Winkel dessen Änderung genau der Fortbewegung des Rotors während einer Messperiode entspricht, was in der Figur 8 näher dargestellt ist. Aufgrund der verhältnismäßig großen Rotorträgheit bei Ventilatoren und der damit verbundenen stetig geringen Drehzahländerung kann auf die Fortbewegung zum Ende der Auswertung hin geschlossen werden.

In der Abbildung oben links der Figur 7 sind die Ströme im statorfesten Koordinatensystem gezeigt mit dem $\alpha$-Stromanteil ($\alpha$-Achse) und dem $\beta$-Stromanteil ($\beta$-Achse). Die nicht geschlossenen Ellipsen stellen je eine ganze Periode der Testfrequenz dar. Die Öffnung der Ellipse kommt durch die Drehung des Rotors. Ohne Rotordrehung wäre Ellipse geschlossen und ihr Mittelpunkt läge im Koordinatenursprung. Die zentral dargestellten Sterne im Ellipsenzentrum mit den entsprechenden Winkelangaben sind die berechneten "Mittelpunkte". Die Berechnung erfolgt mit den oben angegebenen Gleichungen. Rechts daneben ist die wie zuvor beschriebene Korrektur durchgeführt und eine korrigierte Darstellung zu sehen. Der Mittelpunkt der Ellipsen liegt dort im Nullpunkt des Koordinatensystems.

Darunter ist in der Figur 8 die mit einer Winkelmesseinrichtung gemessene Rotorbewegung über die Zeitachse abgebildet. Das Ende der jeweiligen der 5 dargestellten Messphasen $PH_{Mess}$ ist durch eine kurze horizontale Linie angedeutet. Die Angabe $\Delta\gamma$ ist der elektrische Winkel, um den der Rotor während der Messperiode weiter gedreht wurde. Mit $\Delta\lambda$ und dem Pfeil werden die berechnete Drehung und der Zeitpunkt des zur Verfügung stehenden Ergebnisses angegeben.

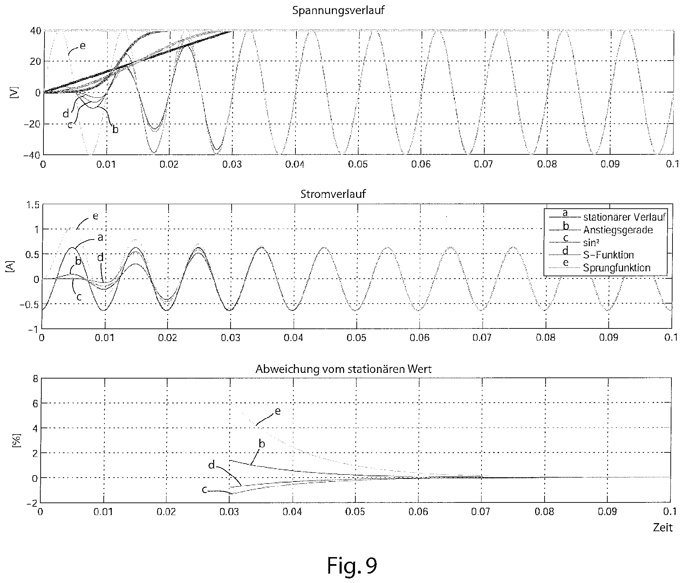

Die Erfindung beschränkt sich in ihrer Ausführung nicht auf die vorstehend angegebenen bevorzugten Ausführungsbeispiele. Vielmehr ist eine Anzahl von Varianten denkbar, welche von der dargestellten Lösung auch bei grundsätzlich anders gearteten Ausführungen Gebrauch macht. So wird eine alternative Ausführungsform der Erfindung dadurch erhalten, dass anstatt der Spannungseinprägung mittels Spannungszeiger der Stromanstieg unmittelbar über eine Stromregelung erfolgt. Es ist in Figur 9 erkennbar, dass der Stromverlauf ebenfalls den wie oben beschriebenen Anstiegsfunktionen folgt. Ferner ist im Vergleich dazu eine Sprungfunktion dargestellt. Mittels den Buchstaben a bis e wurden die Kurven entsprechend zugeordnet. Unten in der Abbildung ist jeweils die Abweichung in % zum stationären Betrieb gezeigt. Die größte Abweichung ergibt sich allerdings bei der Sprungfunktion und die kleinste Abweichung kann bei der erfindungsgemäßen $\sin^2$- und der S-Funktion, sowie bei der Anstiegsgeraden erkannt werden.

**Patentansprüche**

1. Verfahren zur sensorlosen Bestimmung der Rotorlage eines elektronisch kommutierten mehrphasigen EC-Motors (1) mit einem Rotor (2), einem Stator (3) und mit einer Kommutierungsvorrichtung (4) zur Erzeugung von Strangströmen im Spulensystem (5) des Stators (3) mit dem Schritt:

a. Einprägen eines Testsignals in das Spulensystem (5), und **gekennzeichnet dadurch, daß** die Amplitude A des Testsignals einen Hüllkurvenverlauf aufweist, der zunächst während einer Anstiegsphase ($PH_{an}$) ansteigt und danach für eine definierte Anzahl von Perioden $N_A$ während einer Messphase ($PH_{Mess}$) konstant bleibt, ferner **gekennzeichnet durch** die Schritte:

b. Messung des Stromwertes i im Strang während der Messphase ($PH_{Mess}$) als Stromantwort des Testsignals,

c. Berechnung von $|i|$ zur Hüllkurvenermittlung der Stromantwort und

d. Ermittlung der Rotorposition $\gamma_0$ **durch** Auswertung der Kurvenmaxima der Hüllkurve der Stromantwort, wobei der Effekt genutzt wird, dass infolge der Spannungsanregung in Schritt a) dort die größte Strom-Antwort erzeugt wird, wo die Induktivität am geringsten ist, wobei die Rotorposition $\gamma_0$ in Bezug auf die kleinste Induktivität festgelegt wird.

2. Verfahren nach Anspruch 1, **dadurch gekennzeichnet, dass** das Testsignal ein Testspannungssignals $u_1$ oder Teststromsignals $i_1$ ist.

3. Verfahren nach Anspruch 1, **dadurch gekennzeichnet, dass** beim Schritt a) ein Einprägen eines Testspannungssignals $u_1$ in das Spulensystem (5) erfolgt, wobei das Testspannungssignal $u_1$ ein Spannungszeiger mit der Kreisfrequenz $\omega$ darstellt und die Spannungsamplitude A des Spannungszeigers zunächst während einer Anstiegsphase ($PH_{an}$) auf eine Testspannung $U_{TEST}$ ansteigt und danach für eine definierte Anzahl von Perioden $N_A$ während einer Messphase ($PH_{Mess}$) konstant bleibt,

4. Verfahren nach einem der Ansprüche 1 bis 3, **dadurch gekennzeichnet, dass** der Anstieg des Testsignals während der Anstiegsphase ($PH_{an}$) einen solchen Kurvenverlauf aufweist, dass dieser im gesamten Verlauf wenigstens einmal stetig differenzierbar ist.

5. Verfahren nach einem der vorhergehenden Ansprüche, **dadurch gekennzeichnet, dass** sich am Ende der Messphase ($PH_{Mess}$) eine Abklingphase ($PH_{ab}$) anschließt, bei der die Amplitude A der Hüllkurve des Testsignals entsprechend dem Verlauf der Anstiegsfunktion wieder reduziert wird.

6. Verfahren nach Anspruch 1, **dadurch gekennzeichnet, dass** am Ende der Messphase ($PH_{Mess}$) ein direkter Übergang in den Betrieb des EC-Motors (1) durch Kommutierung der Strangströme des Rotors (2), nach Ermittlung der Rotorposition in Schritt d) erfolgt.

7. Verfahren nach einem der vorhergehenden Ansprüche, **dadurch gekennzeichnet, dass** die Amplitude des Spannungszeigers ferner der folgenden zeitabhängigen Funktion $f_D$ folgt, deren Wertebereich zwischen 0 und 1 liegt:

$f_D$ = 0 vor der Anstiegsphase ($PH_{an}$)

$$f_D = f(t) \text{ mit } f'(t) > 0$$

bei der Anstiegsphase ($PH_{an}$) $f_D$ = 1 während der Messphase ($PH_{Mess}$).

8. Verfahren nach Anspruch 3 und 4, **dadurch gekennzeichnet, dass** die Amplitude des Spannungszeigers ferner der folgenden zeitabhängigen Funktion $f_D$ folgt:

$$f_D = f(t) \text{ mit } f'(t) < 0$$

bei der Abklingphase ($PH_{ab}$).

9. Verfahren nach einem der vorhergehenden Ansprüche, **dadurch gekennzeichnet, dass** die Kreisfrequenz $\omega = 2\pi f_{TEST}$ des Spannungszeigers gemäß einer Anregungsfrequenz zwischen einer minimalen und maximalen Frequenz bestimmt wird, die mittels einer Frequenzanalyse bestimmt wird.

10. Verfahren nach einem der vorhergehenden Ansprüche, **dadurch gekennzeichnet, dass** der Amplitudenanstieg A des Testspannungssignals linear oder gemäß einer $\sin^2$-Funktion oder gemäß einer Sigmuidfunktion (S-Funktion) ansteigt.

**11.** Verfahren nach Anspruch 4, 5 und 7, **dadurch gekennzeichnet, dass** die Funktion f(t) eine lineare Funktion, eine $\sin^2$-Funktion oder eine Sigmuidfunktion ist.

**12.** Verfahren nach Anspruch 8, **dadurch gekennzeichnet, dass** zur Gewährleistung einer ausreichend langen Anstiegszeit zur Vermeidung von störenden Geräuschen für die Anstiegsphase ($PH_{an}$) eine Mindestanzahl $N_A$ von Perioden, vorzugsweise mindestens 2 Perioden, weiter bevorzugt von mindestens 4 Perioden gewählt wird.

**13.** Verfahren nach Anspruch 9, **dadurch gekennzeichnet, dass** zur Ermittlung der Rotorlage eines Rotors mit einem Rotordurchmesser $r_{Rotor}$ eines von einem EC-Motor antreibbaren Ventilators mit Laufraddurchmesser $D_{Ventilator}$, **dadurch gekennzeichnet, dass** die Mindestanzahl $N_A$ von Perioden als gerundeter Quotient aus dem halben Laufraddurchmesser $D_{Ventilator}$ und dem Rotordurchmesser $r_{Rotor}$ ermittelt wird.

**14.** Verfahren nach einem der vorhergehenden Ansprüche, **dadurch gekennzeichnet, dass** die Ermittlung der Rotorposition $\gamma_0$ in Schritt d) durch Abfrage eines relativen Winkelwertes $\theta$ des Spannungszeigers erfolgt, bei dem der Amplitudenwert des Stromzeigers i der Stromantwort ein Maximum aufweist oder durch direkte Berechnung in einem statorfesten Bezugssystem durch Ermittlung des Arkustangens aus dem Quotienten der Richtungsanteile des Stromzeigers i.

**15.** Verfahren nach einem der vorhergehenden Ansprüche, **dadurch gekennzeichnet, dass** für die Ermittlung der Rotorposition $\gamma_0$ in Schritt d) eine Polradspannungskompensation vorgesehen wird, wobei für jeden Strangstrom der Mittelwert des Strangstromes aus je zwei Strommaxima bestimmt wird und am Ende der Periode vom gespeicherten Strangstromverlauf subtrahiert wird.

**Claims**

**1.** Method for sensor-free determination of the rotor position of an electronically commutated multiple-phase EC motor (1) with a rotor (2), a stator (3) and comprising a commutation device (4) for generating phase currents in the coil system (5) of the stator (3) with the step.

   a. applying a test signal in the coil system (5), and **characterized in that** the amplitude A of the test signal has an envelope curve variation which at first rises during a rising phase ($PH_{an}$) and then remains constant for a definite number of periods $N_A$ during a measurement phase ($PH_{Mess}$), further **characterized by** the steps:
   b. measuring the current value i in the strand during the measurement phase ($PH_{Mess}$) as a current response to the test signal,
   c. calculating |i| for determining the envelope curve of the current response and
   d. determining the rotor position $\gamma_0$ by evaluating the curve maxima of the envelope curve of the current response, wherein the effect is used that based on the excitation in step a) the largest current response is generated where the inductance is the lowest, wherein the rotor position $\gamma_0$ is established in reference to the lowest inductance.

**2.** Method as claimed in claim 1, **characterized in that** the test signal is a test voltage signal $u_1$ or test current signal $i_1$.

**3.** Method as claimed in claim 1, **characterized in that**, during step a), an applying of a test signal $u_1$ is done in the coil system (5), wherein the test signal $u_1$ constitutes a voltage vector with radian frequency $\omega$ and the voltage amplitude A of the voltage vector at first rises during a rising phase ($PH_{an}$) to a test voltage $U_{TEST}$ and then remains constant for a definite number of periods $N_A$ during a measurement phase ($PH_{Mess}$).

**4.** Method as claimed in one of claims 1 to 3, **characterized in that** the rise in the test signal during the rising phase ($PH_{an}$) has a variation curve such that it is at least once continuously differentiable in the entire variation.

**5.** Method as claimed in one of the preceding claims, **characterized in that**, at the end of the measurement phase ($PH_{Mess}$), there occurs either a falling phase ($PH_{ab}$), during which the amplitude A of the envelope curve of the test signal is further reduced according to the variation of the rise function.

**6.** Method as claimed in claim 1, **characterized in that**, at the end of the measurement phase ($PH_{Mess}$), there occurs a direct transition to the operation of the EC motor (1) by commutation of the phase currents of the rotor (2), after determination of the rotor position in step d).

**7.** Method as claimed in one of the preceding claims, **characterized in that** the amplitude of the voltage vector moreover follows the time-dependent function $f_D$ whose value range lies between 0 and 1:

$f_D = 0$ before the rising phase ($PH_{an}$)

$$f_D = f(t) \text{ with } f'(t) > 0$$

during the rising phase ($PH_{an}$) $f_D = 1$ during the measurement phase ($PH_{Mess}$).

**8.** Method as claimed in claim 3 and 4, **characterized in that** the amplitude of the voltage vector moreover follows the time-dependent function $f_D$:

$$f_D = f(t) \text{ with } f'(t) < 0$$

during the falling phase ($PH_{ab}$).

**9.** Method as claimed in one of the preceding claims, **characterized in that** the radian frequency $\omega = 2\pi f_{TEST}$ of the voltage vector is determined according to an excitation frequency between a minimum and maximum frequency, which is determined by means of frequency analysis.

**10.** Method as claimed in one of the preceding claims, **characterized in that** the amplitude rise A of the test voltage signal is linear or rises according to a $\sin^2$ function or a sigmoid function (S-function).

**11.** Method as claimed in claim 4, 5 and 7, **characterized in that** the function f(t) is a linear function, a $\sin^2$ function, or a sigmoid function.

**12.** Method as claimed in claim 8, **characterized in that**, in order to ensure a sufficiently long rise time to avoid disruptive noises for the rising phase ($PH_{an}$), a minimum number $N_A$ of periods is selected, preferably at least 2 periods, further preferably at least 4 periods.

**13.** Method as claimed in claim 9, **characterized in that** in order to determine the rotor position of a rotor with a rotor diameter $r_{Rotor}$ of a fan driven by an EC motor with impeller diameter $D_{Ventilator}$, the minimum number $N_A$ of periods is determined as the rounded-off quotient of the impeller half-diameter $D_{Ventilator}$ and the rotor diameter $r_{Rotor}$.

**14.** Method as claimed in one of the preceding claims, **characterized in that** the determination of the rotor position $\gamma_0$ in step d) is done by polling a relative angle value 0 of the voltage vector at which the amplitude value of the current vector i of the current response has a maximum or by direct calculation in a stator-fixed reference system by determining the arc-tangent of the quotient of the directional components of the current vector i.

**15.** Method as claimed in one of the preceding claims, **characterized in that** an internal voltage compensation is provided for determining the rotor position $\gamma_0$ in step d), wherein for each phase current one determines the mean value of the phase current from every two current maxima and at the end of the period subtracts it from the memorized phase current variation.

**Revendications**

**1.** Procédé pour déterminer sans capteur la position du rotor d'un moteur EC (1) polyphasé à commutation électronique avec un rotor (2), un stator (3) et avec un dispositif de commutation (4) pour la génération de courants de phase dans le système de bobines (5) du stator (3) avec l'étape de :

    a. injection d'un signal de test dans le système de bobines (5), et **caractérisé en ce que** l'amplitude A du signal de test présente une allure d'enveloppe, qui augmente d'abord pendant une phase de montée ($PH_{an}$) et reste ensuite constante pendant un nombre défini de périodes $N_A$ pendant une phase de mesure ($PH_{Mess}$), **caractérisé en outre par** les étapes de :

b. mesure de la valeur de courant i dans l'élément de phase pendant la phase de mesure (PH$_{Mess}$) en tant que réponse de courant du signal de test,

c. calcul de |i| pour la détermination d'enveloppe de la réponse de courant et

d. détermination de la position de rotor $\gamma_0$ par évaluation des maximums de courbe de l'enveloppe de la réponse de courant, dans lequel l'effet est utilisé que suite à l'excitation de tension dans l'étape a) la plus grande réponse de courant y est générée, là où l'inductance est la plus faible, dans lequel la position de rotor $\gamma_0$ est définie par rapport à la plus petite inductance.

2. Procédé selon la revendication 1, **caractérisé en ce que** le signal de test est un signal de tension de test u$_1$ ou signal de courant de test i$_1$.

3. Procédé selon la revendication 1, **caractérisé en ce que** lors de l'étape a) une injection d'un signal de tension de test u$_1$ dans le système de bobines (5) a lieu, dans lequel le signal de tension de test u$_1$ représente un vecteur de tension avec la fréquence angulaire $\omega$ et l'amplitude de tension A du vecteur de tension augmente d'abord pendant une phase de montée (PH$_{an}$) pour atteindre une tension de test U$_{TEST}$ et reste ensuite constante pendant un nombre défini de périodes N$_A$ pendant une phase de mesure (PH$_{Mess}$).

4. Procédé selon l'une quelconque des revendications 1 à 3, **caractérisé en ce que** l'augmentation du signal de test pendant la phase de montée (PH$_{an}$) présente une telle allure de courbe que celle-ci peut être différenciée constamment au moins une fois dans l'ensemble de l'allure.

5. Procédé selon l'une quelconque des revendications précédentes, **caractérisé en ce qu'**une phase de déclin (PH$_{ab}$) fait suite à la fin de la phase de mesure (PH$_{Mess}$), lors de laquelle l'amplitude A de l'enveloppe du signal de test est à nouveau réduite en fonction de l'allure de la fonction de montée.

6. Procédé selon la revendication 1, **caractérisé en ce qu'**à la fin de la phase de mesure (PH$_{Mess}$) un passage direct au fonctionnement du moteur EC (1) par commutation des courants de phase du rotor (2) a lieu après détermination de la position de rotor dans l'étape d).

7. Procédé selon l'une quelconque des revendications précédentes, **caractérisé en ce que** l'amplitude du vecteur de tension suit en outre la fonction dépendant du temps f$_D$ suivante, dont la plage de valeurs est entre 0 et 1 :

f$_D$ = 0 avant la phase de montée (PH$_{an}$)

$$f_D = f(t) \text{ avec } f'(t) > 0$$

pendant la phase de montée (PH$_{an}$) f$_D$ = 1 pendant la phase de mesure (PH$_{Mess}$).

8. Procédé selon la revendication 3 et 4, **caractérisé en ce que** l'amplitude du vecteur de tension suit en outre la fonction dépendant du temps f$_D$ suivante :

$$f_D = f(t) \text{ avec } f'(t) < 0$$

pendant la phase de déclin (PH$_{ab}$).

9. Procédé selon l'une quelconque des revendications précédentes, **caractérisé en ce que** la fréquence angulaire $\omega = 2\pi f_{TEST}$ du vecteur de tension est déterminée selon une fréquence d'excitation entre une fréquence minimum et maximum, qui est déterminée au moyen d'une analyse de fréquence.

10. Procédé selon l'une quelconque des revendications précédentes, **caractérisé en ce que** l'augmentation d'amplitude A du signal de tension de test augmente de manière linéaire ou selon une fonction sin$^2$ ou selon une fonction sigmoïde (fonction S).

11. Procédé selon la revendication 4, 5 et 7, **caractérisé en ce que** la fonction f(t) est une fonction linéaire, une fonction sin$^2$ ou une fonction sigmoïde.

**12.** Procédé selon la revendication 8, **caractérisé en ce que** pour garantir un temps de montée suffisamment long pour éviter des bruits parasites pour la phase de montée (PH$_{an}$) un nombre minimum N$_A$ de périodes, de préférence au moins 2 périodes, de manière davantage préférée d'au moins 4 périodes est sélectionné.

**13.** Procédé selon la revendication 9, **caractérisé en ce que** pour déterminer la position du rotor d'un rotor avec un diamètre de rotor r$_{Rotor}$ d'un ventilateur pouvant être entraîné par un moteur EC avec diamètre de roue mobile D$_{Venutilator}$, **caractérisé en ce que** le nombre minimum N$_A$ de périodes est déterminé en tant que quotient arrondi du demi diamètre de roue mobile D$_{Ventilator}$ et du diamètre de rotor r$_{Rotor}$.

**14.** Procédé selon l'une quelconque des revendications précédentes, **caractérisé en ce que** la détermination de la position de rotor yo dans l'étape d) a lieu par demande d'une valeur angulaire relative θ du vecteur de tension, dans lequel la valeur d'amplitude du vecteur de courant i de la réponse de courant présente un maximum ou par calcul direct dans un système de référence solidaire du stator par détermination de l'arc tangente à partir du quotient des composantes de direction du vecteur de courant i.

**15.** Procédé selon l'une quelconque des revendications précédentes, **caractérisé en ce que** pour la détermination de la position de rotor $\gamma_0$ dans l'étape d), une compensation de tension de roue polaire est prévue, dans lequel pour chaque courant de phase la moyenne du courant de phase est déterminée à partir de respectivement deux maximums de courant et est soustraite à la fin de la période de l'allure de courant de phase enregistrée.

Fig.2

Fig.1

Fig. 3

Strom

Zeit

Fig. 4

Strom

Zeit

Fig. 5

ohne Polradkompensation

mit Polradkompensation

Fig. 6

**unkorrigiert**

**korrigiert**

Testperiode 1 (λ: 342.5°)
Testperiode 2 (λ: 1.2°)
Testperiode 3 (λ: 20.2°)
Testperiode 4 (λ: 38.1°)
Testperiode 5 (λ: 53.6°)

Fig. 7

**Rotorbewegung**

Δλ: 15.5°
Δλ: 17.9°  Δγ: 14.4°
Δλ: 18.9°  Δγ: 15.7°
Δλ: 18.7°  Δγ: 16.9°
Δγ: 18.5°
Δγ: 19.8°

Fig. 8

Spannungsverlauf

Stromverlauf

a — stationärer Verlauf
b — Anstiegsgerade
c — sin²
d — S-Funktion
e ········· Sprungfunktion

Abweichung vom stationären Wert

Zeit

Fig. 9

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20100181952 A1
- EP 2061147 A2
- US 8294397 B2
- US 7334854 B1
- AT 395487 B
- DE 102012212766 A1
- EP 2293430 A1